# EUROPEAN PATENT APPLICATION

(11) **EP 4 712 229 A1**
(43) Date of publication of application: **18.03.2026**
(21) Application number: 25191622.7
(22) Date of filing: 24.07.2025
(51) Int. Cl.: H01M 50/204, H01M 50/289, H01M 50/291, H01M 50/244

(54) **BATTERY PACK**

(30) Priority: 17.09.2024 JP 2024159847
(71) Applicant: Prime Planet Energy & Solutions, Inc., Chuo-ku, Tokyo 103-0022 (JP)
(72) Inventor: TERAUCHI, Shinobu, Tokyo, 103-0022 (JP)
(74) Representative: Kuhnen & Wacker Patent- und Rechtsanwaltsbüro PartG mbB

(57) **Abstract**

A battery pack (1) includes: a plurality of battery modules (20) each including a plurality of battery cells (2) arranged in a first direction; and a case (40) that accommodates the plurality of battery modules (20), wherein the case (40) includes a case main body (43) having a bottom portion (41) and a side wall portion (42) that surrounds a periphery of the bottom portion (41), a cover body (44) that covers an opening (43a) of the case main body (43), and a partition plate (45) that partitions a battery module (20) disposed on the bottom portion (41) side and a battery module (20) disposed on the cover body (44) side, and by fixing the partition plate (45) to the side wall portion (42), one battery module (20) is disposed between the partition plate (45) and the bottom portion (41), and another battery module (20) is disposed between the partition plate (45) and the cover body (44).

## Description

### CROSS REFERENCE TO RELATED APPLICATIONS

This nonprovisional application is based on Japanese Patent Application No. 2024-159847 filed on September 17, 2024 with the Japan Patent Office, the entire contents of which are hereby incorporated by reference.

### BACKGROUND OF THE INVENTION

### Field of the Invention

The present technology relates to a battery pack.

### Description of the Background Art

Japanese Patent Laying-Open No. 2023-012759 discloses a structure in which battery modules are arranged in two stages within a case of a battery pack. By arranging the battery modules in the two stages, energy density of the battery pack can be improved and size reduction of the battery pack can be attained.

### SUMMARY OF THE INVENTION

In a battery pack, the number of battery cells included in a battery module to be mounted tends to be large. As a result, the weight of the battery module is also increased. On the other hand, when a large number of pillars are provided in a case in order to support the increased weight of the battery module, the case has a large size. As a result, this can be a factor that hinders the improved energy density and the size reduction of the battery pack.

The present technology has been made to solve the above problem and has an object to provide a battery pack including a configuration by which the size of a case can be suppressed from being large by effectively utilizing a space in the case.

The present technology provides the following battery pack.
[1] A battery pack comprising: a plurality of battery modules each including a plurality of battery cells arranged in a first direction; and a case that accommodates the plurality of battery modules, wherein the case includes a case main body having a bottom portion and a side wall portion that surrounds a periphery of the bottom portion, a cover body that covers an opening of the case main body, and a partition plate that partitions a battery module disposed on the bottom portion side and a battery module disposed on the cover body side, and by fixing the partition plate to the side wall portion, one battery module is disposed between the partition plate and the bottom portion, and another battery module is disposed between the partition plate and the cover body.
[2] The battery pack according to [1], wherein the side wall portion includes a first side wall portion located in a second direction orthogonal to the first direction, and a second side wall portion disposed to face the first side wall portion, a first main stage portion on which one end of the partition plate is placed is provided at the first side wall portion, and a second main stage portion on which the other end of the partition plate is placed is provided at the second side wall portion, and the partition plate is disposed to bridge between the first main stage portion and the second main stage portion.
[3] The battery pack according to [1] or [2], wherein each of the battery modules includes a first end portion and a second end portion each located in the first direction, a first support member that extends in a second direction orthogonal to the first direction and that has both end portions protruding with respect to end portions of the battery module is fixed to the first end portion, a second support member that extends in the second direction and that has both end portions protruding with respect to end portions of the battery module is fixed to the second end portion, at the battery module on the bottom portion side between the partition plate and the bottom portion, the first support member and the second support member are fixed to the side wall portion, and at the battery module on the cover body side between the partition plate and the cover body, the first support member and the second support member are fixed to the partition plate.
[4] The battery pack according to [3], wherein the side wall portion includes a first side wall portion located in the second direction orthogonal to the first direction, and a second side wall portion disposed to face the first side wall portion, and at the battery module on the bottom portion side, one end portion of the first support member and one end portion of the second support member are fixed to the first side wall portion, and the other end portion of the first support member and the other end portion of the second support member are fixed to the second side wall portion.
[5] The battery pack according to [4], wherein on the bottom portion side, two battery modules are arranged in the second direction, at the bottom portion between the two battery modules, a bottom-portion rising wall extending in the first direction is provided, the other end portion of the first support member of one battery module of the battery modules is fixed to the bottom-portion rising wall, and one end portion of the first support member of the other battery module of the battery modules is fixed to the bottom-portion rising wall, the other end portion of the second support member of the one battery module of the battery modules is fixed to the bottom-portion rising wall, and one end portion of the second support member of the other battery module of the battery modules is fixed to the bottom-portion rising wall, and the partition plate is fixed and supported by the bottom-portion rising wall.
[6] The battery pack according to any one of [3] to [5], wherein the side wall portion includes a first side wall portion located in the second direction orthogonal to the first direction, and a second side wall portion disposed to face the first side wall portion, the partition plate has a main plate disposed in parallel with the bottom portion, a first side wall plate located on the first side wall portion side, and a second side wall plate located on the second side wall portion side, one end portion of the first support member and one end portion of the second support member are fixed to the first side wall plate, and the other end portion of the first support member and the other end portion of the second support member are fixed to the second side wall plate.
[7] The battery pack according to [6], wherein on the cover body side, two battery modules are arranged in the second direction, a partition-plate rising wall extending in the first direction is provided at the partition plate between the two battery modules, the other end portion of the first support member of one battery module of the battery modules is fixed to the partition-plate rising wall, and one end portion of the first support member of the other battery module of the battery modules is fixed to the partition-plate rising wall, and the other end portion of the second support member of the one battery module of the battery modules is fixed to the partition-plate rising wall, and one end portion of the second support member of the other battery module of the battery modules is fixed to the partition-plate rising wall.
[8] The battery pack according to [7], wherein on the bottom portion side, two battery modules are arranged in the second direction, at the bottom portion between the two battery modules, a bottom-portion rising wall extending in the first direction is provided, and the partition-plate rising wall is fixed to the bottom-portion rising wall.
[9] The battery pack according to any one of [1] to [8], wherein a bottom-portion-side cooling member is disposed between the battery module and the bottom portion, and a partition-plate-side cooling member is disposed between the battery module and the partition plate.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery pack according to an embodiment.
Fig. 2 is an exploded perspective view of the battery pack according to the embodiment.
Fig. 3 is a cross sectional view along a line III-III in Fig. 1.
Fig. 4 is a cross sectional view along a line IV in Fig. 1.

### DESCRIPTION OF THE PREFERRED EMBODIMENTS

Hereinafter, embodiments of the present technology will be described. The same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. In the embodiments described below, each component is not necessarily essential to the present technology unless otherwise stated particularly. The present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode.

The "battery pack" in the present specification can be mounted on vehicles such as a hybrid electric vehicle (HEV), a plug-in hybrid electric vehicle (PHEV), and a battery electric vehicle (BEV). The use of the "battery pack" in the present specification is not limited to the use in a vehicle.

In the following description, a direction in which a plurality of battery cells are arranged in one battery module is defined as a first direction (X direction in the figures), a direction in which battery modules are arranged side by side in the same plane and which is orthogonal to the first direction (X direction in the figures) is defined as a second direction (Y direction in the figures), and a direction in which battery modules are arranged in two stages is defined as a third direction (Z direction in the figures). In order to facilitate understanding of the present technology, a dimensional ratio of each configuration in the figures may be illustrated to be changed from an actual dimensional ratio thereof.

### (Battery Pack 1)

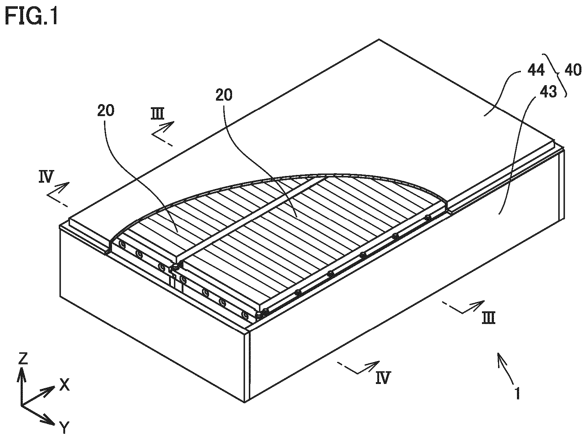

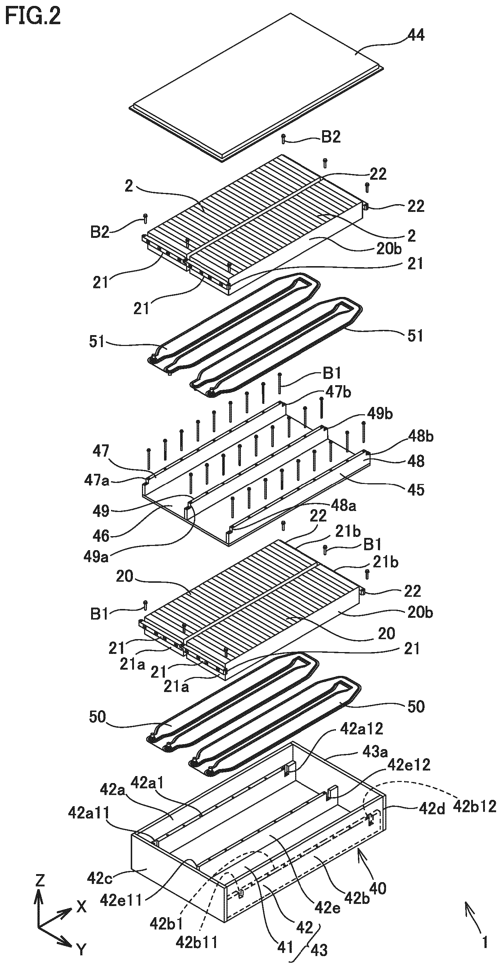

An overall configuration of battery pack 1 will be described with reference to Figs. 1 and 2. Battery pack 1 includes: a plurality of battery modules 20 each including a plurality of battery cells 2 arranged in the first direction (X direction); and a case 40 that accommodates the plurality of battery modules 20. Each of battery cells 2 has a prismatic external shape. In each of battery modules 20, the plurality of battery cells 2 arranged in the first direction are fixed to be integrated by a binding bar 20b or the like.

In the present embodiment, battery modules 20 are arranged in two rows in the second direction (Y direction) and battery modules 20 are stacked in two stages in the third direction (Z direction) in case 40, with the result that four battery modules 20 are accommodated in case 40 in total. Regarding the number of battery modules 20 accommodated within case 40, the number of battery modules 20 arranged in the second direction (Y direction) may be one or more as long as battery modules 20 are configured to be stacked in two stages in the third direction (Z direction).

A bottom-portion-side cooling member 50, battery modules 20 arranged in two rows, a partition plate 45, a partition-plate-side cooling member 51, and battery modules 20 arranged in two rows are accommodated in case 40 in this order from the lower side to the upper side as shown in the figure, and an opening 43a of an upper portion of case 40 is closed by a cover body 44. Cover body 44 is fixed to case 40 by using bolts or the like (not shown).

By fixing partition plate 45 to side wall portion 42 of case 40, one or more battery modules 20 are disposed between partition plate 45 and bottom portion 41, and one or more battery modules 20 are disposed between partition plate 45 and cover body 44.

### (Case 40)

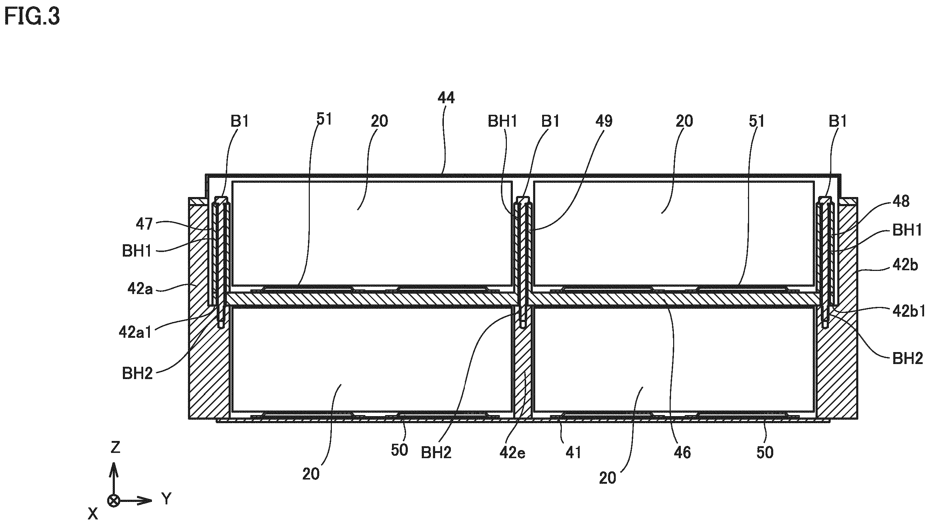

A specific configuration of case 40 will be described with reference to Figs. 2 and 3. Case 40 includes a case main body 43 and a cover body 44. Case main body 43 has a bottom portion 41 and a side wall portion 42 surrounding a periphery of bottom portion 41. Partition plate 45 that partitions each battery module 20 disposed on the bottom portion 41 side and each battery module 20 disposed on the cover body 44 side is disposed in case main body 43.

Side wall portion 42 includes: a first side wall portion 42a located in the second direction (Y direction) orthogonal to the first direction (X direction); and a second side wall portion 42b disposed to face first side wall portion 42a. Further, side wall portion 42 includes: a third side wall portion 42c located in the first direction (X direction); and a fourth side wall portion 42d disposed to face third side wall portion 42c.

In the present embodiment, bottom portion 41 has a rectangular shape, and first side wall portion 42a, second side wall portion 42b, third side wall portion 42c, and fourth side wall portion 42d are provided to surround bottom portion 41, thereby forming case main body 43 having a box shape.

A first main stage portion 42a1 for supporting partition plate 45 is provided at an inner peripheral surface of first side wall portion 42a so as to extend in the first direction (X direction). A second main stage portion 42b1 for supporting partition plate 45 is provided at an inner peripheral surface of second side wall portion 42b so as to extend in the first direction (X direction).

A first first-auxiliary stage portion 42a11 on which one end of a first support member 21 described later is placed is provided in a region of the inner peripheral surface of first side wall portion 42a close to third side wall portion 42c. A first second-auxiliary stage portion 42a12 on which one end of a second support member 22 described later is placed is provided in a region of the inner peripheral surface of first side wall portion 42a close to fourth side wall portion 42d.

A second first-auxiliary stage portion 42b11 on which the other end of first support member 21 is placed is provided in a region of the inner peripheral surface of second side wall portion 42b close to third side wall portion 42c. A second second-auxiliary stage portion 42b12 on which the other end of second support member 22 is placed is provided in a region of the inner peripheral surface of second side wall portion 42b close to fourth side wall portion 42d.

Since there is employed the configuration in which battery modules 20 are arranged in two rows in the second direction (Y direction) in the present embodiment, a bottom-portion rising wall 42e extending in the first direction (X direction) is provided at bottom portion 41 between two battery modules 20.

A third first-auxiliary stage portion 42e11 on which the other end of first support member 21 and the one end of first support member 21 are placed is provided in a region of bottom-portion rising wall 42e close to third side wall portion 42c. A third second-auxiliary stage portion 42e12 on which the other end of second support member 22 and the one end of second support member 22 are placed is provided in a region of bottom-portion rising wall 42e close to fourth side wall portion 42d.

### (Partition Plate 45)

A specific configuration of partition plate 45 will be described with reference to Figs. 2 and 3. Partition plate 45 serves to partition battery modules 20 disposed on the bottom portion 41 side (bottom portion side) and battery modules 20 disposed on the cover body 44 side (cover portion side).

Partition plate 45 has: a main plate 46 disposed in parallel with bottom portion 41; a first side wall plate 47 located on the first side wall portion 42a side; and a second side wall plate 48 located on the second side wall portion 42b side. First side wall plate 47 and second side wall plate 48 are provided to rise with respect to main plate 46 and extend in the first direction (X direction).

One end of main plate 46 is fixed to first main stage portion 42a1 provided at first side wall portion 42a, and the other end of main plate 46 is fixed to second main stage portion 42b1 provided at second side wall portion 42b. Thus, partition plate 45 is disposed to bridge between first main stage portion 42a1 and second main stage portion 42b1.

Specifically, a plurality of bolt-through holes BH1 are provided in first side wall plate 47 at a predetermined pitch along the first direction (X direction) so as to extend therethrough in the third direction (Z direction). A plurality of screw holes BH2 are provided at positions of first main stage portion 42al facing bolt-through holes BH1. The one end of main plate 46 is fastened and fixed to first main stage portion 42a1 by fastening, to screw holes BH2, bolts B1 having passed through bolt-through holes BH1.

Similarly, a plurality of bolt-through holes BH1 are provided in second side wall plate 48 at a predetermined pitch along the first direction (X direction) so as to extend therethrough in the third direction (Z direction). A plurality of screw holes BH2 are provided at positions of second main stage portion 42b1 facing bolt-through holes BH1. The other end of main plate 46 is fastened and fixed to second main stage portion 42b1 by fastening, to screw holes BH2, bolts B1 having passed through bolt-through holes BH1.

Since there is employed the configuration in which battery modules 20 are arranged in two rows in the second direction (Y direction) in the present embodiment, partition-plate rising wall 49 extending in the first direction (X direction) is provided at partition plate 45 between two battery modules 20. Further, main plate 46 of partition plate 45 is fixed and supported by bottom-portion rising wall 42e.

Specifically, a plurality of bolt-through holes BH1 are provided in partition-plate rising wall 49 at a predetermined pitch along the first direction (X direction) so as to extend therethrough in the third direction (Z direction). A plurality of screw holes BH2 are provided at positions of bottom-portion rising wall 42e facing bolt-through holes BH1.

By fastening, to screw holes BH2 of bottom-portion rising wall 42e, bolts B 1 having passed through bolt-through holes BH1 of partition-plate rising wall 49, main plate 46 of partition plate 45 is fixed and supported by bottom-portion rising wall 42e. Bottom-portion rising wall 42e and partition-plate rising wall 49 are caused to coincide with each other, thereby suppressing flection of main plate 46 and suppressing generation of vibration.

### (Fixing Structure for Battery Modules 20)

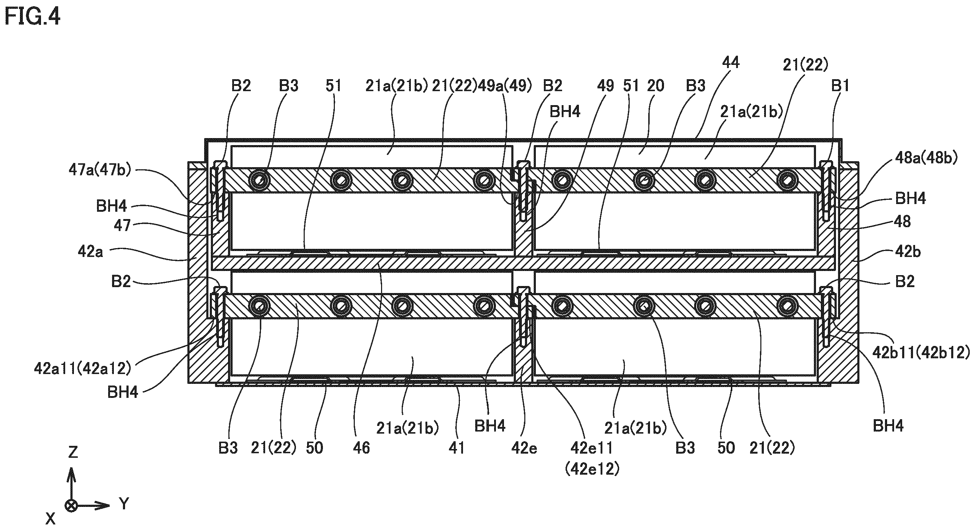

A fixing structure for battery modules 20 will be described below with reference to Figs. 2 and 4. Reference characters shown in Fig. 4 mainly represent configurations on the third side wall portion 42c side (the first end portion 21a side of each battery module 20), and reference characters in parentheses represent configurations on the fourth side wall portion 42d side (the second end portion 21b side of each battery module 20).

Battery module 20 includes first end portion 21a and second end portion 21b each located in the first direction (X direction). First support member 21 that extends in the second direction (Y direction) orthogonal to the first direction (X direction) and that has both end portions protruding with respect to end portions of battery module 20 is fixed to first end portion 21a by using bolts B3. Second support member 22 that extends in the second direction (Y direction) and that has both end portions protruding with respect to end portions of battery module 20 is fixed to second end portion 21b.

### (Fixation of Battery Modules 20 on Bottom-Portion Side)

Each of battery modules 20 on the bottom portion side is fixed to side wall portion 42 and bottom-portion rising wall 42e by using first support member 21 and second support member 22. Specifically, at battery module 20 located on the left side in the figure, first first-auxiliary stage portion 42a11 is provided on the third side wall portion 42c side of first side wall portion 42a, and the one end portion of first support member 21 is fastened and fixed to first first-auxiliary stage portion 42a11 by using bolt B2. The other end portion of first support member 21 is fastened and fixed to third first-auxiliary stage portion 42e11 of bottom-portion rising wall 42e by using bolts B2. Each of first first-auxiliary stage portion 42a11 and third first-auxiliary stage portion 42e11 is provided with screw hole BH4.

First second-auxiliary stage portion 42a12 is also provided on the fourth side wall portion 42d side of first side wall portion 42a, and the one end portion of second support member 22 is fastened and fixed to first second-auxiliary stage portion 42a12 by using bolt B2. The other end portion of second support member 22 is fastened and fixed to third second-auxiliary stage portion 42e12 of bottom-portion rising wall 42e by using bolt B2. Each of first second-auxiliary stage portion 42a12 and third second-auxiliary stage portion 42e12 is provided with screw hole BH4.

At battery module 20 located on the right side in the figure, second first-auxiliary stage portion 42b11 is provided on the third side wall portion 42c side of second side wall portion 42b, and the other end portion of first support member 21 is fastened and fixed to second first-auxiliary stage portion 42b11 by using bolt B2. The one end portion of first support member 21 is fastened and fixed to third first-auxiliary stage portion 42e11 of bottom-portion rising wall 42e by using bolt B2. Second first-auxiliary stage portion 42b11 is provided with screw hole BH4.

Second second-auxiliary stage portion 42b12 is also provided on the fourth side wall portion 42d side of second side wall portion 42b, and the other end portion of second support member 22 is fastened and fixed to second second-auxiliary stage portion 42b12 by using bolt B2. The one end portion of second support member 22 is fastened and fixed to third second-auxiliary stage portion 42e12 of bottom-portion rising wall 42e by using bolt B2. Second second-auxiliary stage portion 42b12 is provided with screw hole BH4.

For the other end of first support member 21 on the left side and the one end of first support member 21 on the right side, a so-called half-lap joint structure is employed with the two support members being fastened together to bottom-portion rising wall 42e by one bolt B2 without causing a level difference.

In the above-described configuration, the configuration for supporting the respective end portions of first support member 21 and second support member 22 may be placed on the upper surfaces of first main stage portion 42a1, second main stage portion 42b1, and bottom-portion rising wall 42e.

### (Fixation of Battery Modules 20 on Cover Portion Side)

Each of battery modules 20 on the cover portion side is fixed to partition plate 45 by using first support member 21 and second support member 22. Specifically, at battery module 20 located on the left side in the figure, a first stage portion 47a is provided on the third side wall portion 42c side of first side wall plate 47, and the one end portion of first support member 21 is fastened and fixed to first stage portion 47a by using bolt B2. A fifth stage portion 49a is provided on the third side wall portion 42c side of partition-plate rising wall 49, and the other end portion of first support member 21 is fastened and fixed to fifth stage portion 49a by using bolt B2. Each of first stage portion 47a and fifth stage portion 49a is provided with screw hole BH4.

A second stage portion 47b is provided on the fourth side wall portion 42d side of first side wall plate 47, and the one end portion of second support member 22 is fastened and fixed to second stage portion 47b by using bolt B2. A sixth stage portion 49b is provided on the fourth side wall portion 42d side of partition-plate rising wall 49, and the other end portion of second support member 22 is fastened and fixed to sixth stage portion 49b by using bolt B2. Each of second stage portion 47b and sixth stage portion 49b is provided with screw hole BH4.

At battery module 20 located on the right side in the figure, a third stage portion 48a is provided on the third side wall portion 42c side of second side wall plate 48, and the other end portion of first support member 21 is fastened and fixed to third stage portion 48a by using bolt B2. The one end portion of first support member 21 is fastened and fixed to fifth stage portion 49a of partition-plate rising wall 49 by using bolt B2. Third stage portion 48a is provided with screw hole BH4.

A fourth stage portion 48b is provided on the fourth side wall portion 42d side of second side wall plate 48, and the other end portion of second support member 22 is fastened and fixed to fourth stage portion 48b by using bolt B2. The one end portion of second side wall plate 48 is fastened and fixed to sixth stage portion 49b of partition-plate rising wall 49 by using bolt B2. Fourth stage portion 48b is provided with screw hole BH4.

For the other end of first support member 21 on the left side and the one end of first support member 21 on the right side, a so-called half-lap joint structure is employed with the two support members being fastened together to the partition-plate rising wall 49 by one bolt B2 without causing a level difference.

In the above-described configuration, the configuration for supporting the respective end portions of first support member 21 and second support member 22 may be placed on the upper surfaces of first side wall plate 47, second side wall plate 48, and partition-plate rising wall 49.

By employing the above-described fixing structure for battery modules 20, a clearance can be provided between each battery module 20 disposed on the bottom portion side and bottom portion 41, and bottom-portion-side cooling member 50 can be disposed in the clearance. Similarly, a clearance can be provided between each battery module 20 disposed on the cover portion side and main plate 46, and partition-plate-side cooling member 51 can be disposed in the clearance.

According to battery pack 1 described above, there is employed the configuration in which both the ends of partition plate 45 are fixed to side wall portion 42 of case main body 43. With this configuration, the size of case 40 can be suppressed from being large by effectively utilizing the space in case 40.

In the above-described configuration, there has been illustratively shown the configuration in which battery modules 20 are arranged in two rows in the second direction (Y direction) and battery modules 20 are stacked in two stages in the third direction (Z direction); however, also in a configuration in which one battery module 20 is arranged in the second direction (Y direction) or battery modules 20 are arranged in three or more rows in the second direction (Y direction) and battery modules 20 are stacked in three stages in the third direction (Z direction), it is possible to obtain the same functions and effects as those in the present embodiment.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery pack (1) comprising:
a plurality of battery modules (20) each including a plurality of battery cells (2) arranged in a first direction (X); and
a case (40) that accommodates the plurality of battery modules (20), wherein
the case (40) includes a case main body (43) having a bottom portion (41) and a side wall portion (42) that surrounds a periphery of the bottom portion (41), a cover body (44) that covers an opening (43a) of the case main body (43), and a partition plate (45) that partitions a battery module (20) disposed on the bottom portion (41) side and a battery module (20) disposed on the cover body (44) side, and
by fixing the partition plate (45) to the side wall portion (42), one battery module (20) is disposed between the partition plate (45) and the bottom portion (41), and another battery module (20) is disposed between the partition plate (45) and the cover body (44).

2. The battery pack according to claim 1, wherein
the side wall portion (42) includes a first side wall portion (42a) located in a second direction (Y) orthogonal to the first direction (X), and a second side wall portion (42b) disposed to face the first side wall portion (42a),
a first main stage portion (42a1) on which one end of the partition plate (45) is placed is provided at the first side wall portion (42a), and a second main stage portion (42b1) on which the other end of the partition plate (45) is placed is provided at the second side wall portion (42b), and
the partition plate (45) is disposed to bridge between the first main stage portion (42a1) and the second main stage portion (42b1).

3. The battery pack according to claim 1 or 2, wherein
each of the battery modules (20) includes a first end portion (21a) and a second end portion (21b) each located in the first direction (X),
a first support member (21) that extends in a second direction (Y) orthogonal to the first direction (X) and that has both end portions protruding with respect to end portions of the battery module (20) is fixed to the first end portion (21a),
a second support member (22) that extends in the second direction (Y) and that has both end portions protruding with respect to end portions of the battery module (20) is fixed to the second end portion (21b),
at the battery module (20) on the bottom portion side between the partition plate (45) and the bottom portion (41), the first support member (21) and the second support member (22) are fixed to the side wall portion (42), and
at the battery module (20) on the cover body side between the partition plate (45) and the cover body (44), the first support member (21) and the second support member (22) are fixed to the partition plate (45).

4. The battery pack according to claim 3, wherein
the side wall portion (42) includes a first side wall portion (42a) located in the second direction (Y) orthogonal to the first direction (X), and a second side wall portion (42b) disposed to face the first side wall portion (42a), and
at the battery module (20) on the bottom portion side, one end portion of the first support member (21) and one end portion of the second support member (22) are fixed to the first side wall portion (42a), and the other end portion of the first support member (21) and the other end portion of the second support member (22) are fixed to the second side wall portion (42b).

5. The battery pack according to claim 4, wherein
on the bottom portion side, two battery modules (20) are arranged in the second direction (Y),
at the bottom portion (41) between the two battery modules (20), a bottom-portion rising wall (42e) extending in the first direction (X) is provided,
the other end portion of the first support member (21) of one battery module (20) of the battery modules (20) is fixed to the bottom-portion rising wall (42e), and one end portion of the first support member (21) of the other battery module (20) of the battery modules (20) is fixed to the bottom-portion rising wall (42e),
the other end portion of the second support member (22) of the one battery module (20) of the battery modules (20) is fixed to the bottom-portion rising wall (42e), and one end portion of the second support member (22) of the other battery module (20) of the battery modules (20) is fixed to the bottom-portion rising wall (42e), and
the partition plate (45) is fixed and supported by the bottom-portion rising wall (42e).

6. The battery pack according to any one of claims 3 to 5, wherein
the side wall portion (42) includes a first side wall portion (42a) located in the second direction (Y) orthogonal to the first direction (X), and a second side wall portion (42b) disposed to face the first side wall portion (42a),
the partition plate (45) has a main plate (46) disposed in parallel with the bottom portion (41), a first side wall plate (47) located on the first side wall portion (42) side, and a second side wall plate (48) located on the second side wall portion (43) side,
one end portion of the first support member (21) and one end portion of the second support member (22) are fixed to the first side wall plate (47), and
the other end portion of the first support member (21) and the other end portion of the second support member (22) are fixed to the second side wall plate (48).

7. The battery pack according to claim 6, wherein
on the cover body side, two battery modules (20) are arranged in the second direction (Y),
a partition-plate rising wall (49) extending in the first direction (X) is provided at the partition plate (45) between the two battery modules (20),
the other end portion of the first support member (21) of one battery module (20) of the battery modules (20) is fixed to the partition-plate rising wall (49), and one end portion of the first support member (21) of the other battery module (20) of the battery modules (20) is fixed to the partition-plate rising wall (49), and
the other end portion of the second support member (22) of the one battery module (20) of the battery modules (20) is fixed to the partition-plate rising wall (49), and one end portion of the second support member (22) of the other battery module (20) of the battery modules (20) is fixed to the partition-plate rising wall (49).

8. The battery pack according to claim 7, wherein
on the bottom portion side, two battery modules (20) are arranged in the second direction (Y),
at the bottom portion (41) between the two battery modules (20), a bottom-portion rising wall (42e) extending in the first direction (X) is provided, and
the partition-plate rising wall (49) is fixed to the bottom-portion rising wall (42e).

9. The battery pack according to any one of claims 1 to 8, wherein
a bottom-portion-side cooling member (50) is disposed between the battery module (20) and the bottom portion (41), and
a partition-plate-side cooling member (51) is disposed between the battery module (20) and the partition plate (45).
